# EUROPEAN PATENT APPLICATION

(11) **EP 4 151 404 A1**
(43) Date of publication of application: **22.03.2023**
(21) Application number: 21804829.6
(22) Date of filing: 30.04.2021
(51) Int. Cl.: B32B 27/30, B29C 43/32, B32B 27/34, B32B 37/10, C08J 5/18, C08J 7/04

(54) **HEAT-RESISTANT BUFFERING SHEET, AND HEATING/PRESSURIZING TREATMENT METHOD**

(30) Priority: 14.05.2020 JP 2020085472
(71) Applicant: NITTO DENKO CORPORATION, Ibaraki-shi Osaka 567-8680 (JP)
(72) Inventor: MURAKI Yuuzou, Ibaraki-shi, Osaka 567-8680 (JP); AKIBA Kurato, Ibaraki-shi, Osaka 567-8680 (JP)
(74) Representative: Müller-Boré & Partner Patentanwälte PartG mbB
(86) International application number: PCT/JP2021/017289
(87) International publication number: WO 2021/230116

(57) **Abstract**

A provided heat-resistant cushioning sheet is a sheet configured to be disposed between a thermocompression face of a thermocompression apparatus and a target in a thermocompression treatment of the target, and includes: a substrate including a fluorine resin; and a coating layer including a heat-resistant resin and disposed on a one principal surface side of the substrate. One exposed surface of the heat-resistant cushioning sheet is formed by the coating layer. The heat-resistant resin is a resin other than a fluorine resin and has a melting point of 280°C or higher and/or a glass transition temperature of 210°C or higher. The provided heat-resistant cushioning sheet is well adapted to expected further increases in treatment temperature and pressure.

## Description

### TECHNICAL FIELD

The present invention relates to a heat-resistant cushioning sheet and a thermocompression treatment method using the heat-resistant cushioning sheet.

### BACKGROUND ART

Fluorine resins are known as heat-resistant resins. Patent Literature 1 discloses a sheet including polytetrafluoroethylene (hereinafter referred to as "PTFE"), which is a kind of fluorine resin. The PTFE sheet which is a heat-resistant resin sheet is supposed to be used at high temperatures.

### CITATION LIST

### Patent Literature

Patent Literature 1: WO 2007/046482 A1

### SUMMARY OF INVENTION

### Technical Problem

A thermocompression treatment of a target may be performed using a thermocompression apparatus. For the thermocompression treatment, it is conceivable that a heat-resistant cushioning sheet is disposed between a thermocompression face of the thermocompression apparatus and the target (target to be treated) to prevent direct contact between the target and the thermocompression face and that a heat-resistant resin sheet, such as the PTFE sheet of Patent Literature 1 is used as the heat-resistant cushioning sheet. However, according to studies by the present inventors, when used as the heat-resistant cushioning sheet, the PTFE sheet of Patent Literature 1 cannot necessarily be adapted sufficiently to expected further increases in treatment temperature and pressure. The above studies revealed that further increases in treatment temperature and pressure are likely to result in uneven treatment which is supposedly due to non-uniform application of the pressure and temperature or are likely to result in attachment of a substance not included in the target to a surface of the target, the surface being in contact with the heat-resistant cushioning sheet.

The present invention aims to provide a heat-resistant cushioning sheet configured to be disposed between a thermocompression face of a thermocompression apparatus and a target in a thermocompression treatment of the target, the heat-resistant cushioning sheet being adaptable more reliably to expected further increases in treatment temperature and pressure.

### Solution to Problem

The present invention provides a heat-resistant cushioning sheet,
the heat-resistant cushioning sheet being configured to be disposed between a thermocompression face of a thermocompression apparatus and a target in a thermocompression treatment of the target, the heat-resistant cushioning sheet including:
a substrate including a fluorine resin; and
a coating layer including a heat-resistant resin and disposed on one principal surface side of the substrate, wherein
one exposed surface of the heat-resistant cushioning sheet is formed by the coating layer, and
the heat-resistant resin is a resin other than a fluorine resin and has a melting point of 280°C or higher and/or a glass transition temperature of 210°C or higher.

In another aspect, the present invention provides a method of a thermocompression treatment of a target using a thermocompression apparatus, wherein
the thermocompression treatment is performed in a state where a heat-resistant cushioning sheet is disposed between the target and a thermocompression face of the apparatus,
the heat-resistant cushioning sheet is the above heat-resistant cushioning sheet of the present invention, and
in the thermocompression treatment, the heat-resistant cushioning sheet is disposed between the target and the thermocompression face such that the one exposed surface formed by the coating layer is in contact with the target.

### Advantageous Effects of Invention

The studies by the present inventors revealed the following. (1) Further increases in pressure and temperature cause a surface of a PTFE sheet to flow, which applies a force between the surface and a target in a sliding direction to form a fibrous PTFE on the surface. (2) This problem is thought to be caused by a thermocompression treatment performed with the fibrous PTFE sandwiched between a heat-resistant cushioning sheet and the target. (3) A substance attached on the target is the above fibrous PTFE. (4) Although a fluorine resin such as PTFE has a higher flexibility than those of other heat-resistant resins and therefore contributes to a high cushioning ability of the heat-resistant cushioning sheet, the fluorine resin tends to become fibrous by a force, such as the force in the sliding direction, that can extend a resin. This tendency greatly affects formation of the fibrous PTFE.

The heat-resistant cushioning sheet of the present invention includes the substrate including the fluorine resin contributing to a high cushioning ability, and includes the one exposed surface formed by the coating layer including the heat-resistant resin other than a fluorine resin. When used such that the exposed surface formed by the coating layer is in contact with the target, the heat-resistant cushioning sheet can reduce occurrence of the above problem and can be more reliably adapted to expected further increases in treatment temperature and pressure.

### BRIEF DESCRIPTION OF DRAWINGS

FIG. 1 is a cross-sectional view schematically showing an example of a heat-resistant cushioning sheet of the present invention.
FIG. 2 is a cross-sectional view schematically showing an example of the heat-resistant cushioning sheet of the present invention.
FIG. 3 is a schematic diagram illustrating an example of a thermocompression treatment using the heat-resistant cushioning sheet of the present invention.
FIG. 4 shows an enlarged observation image of a surface of a semiconductor chip having undergone a hot pressing test performed in EXAMPLES for a target including the semiconductor chip.

### DESCRIPTION OF EMBODIMENTS

Embodiments of the present invention will be described hereinafter with reference to the drawings. The present invention is not limited to the following embodiments.

### [Heat-resistant cushioning sheet]

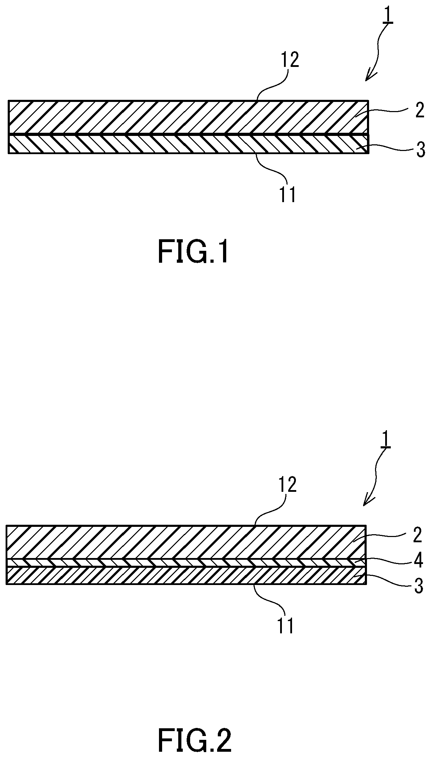

FIG. 1 shows an example of a heat-resistant cushioning sheet of the present invention. A heat-resistant cushioning sheet 1 shown in FIG. 1 includes a substrate 2 including a fluorine resin and a coating layer 3 including a heat-resistant resin. The coating layer 3 is disposed on a one principal surface side of the substrate 2, more specifically, on one principal surface of the substrate 2. One exposed surface 11 of the heat-resistant cushioning sheet 1 is formed by the coating layer 3. The other exposed surface 12 of the heat-resistant cushioning sheet 1 is formed by the substrate 2. The heat-resistant cushioning sheet 1 of FIG. 1 has a double-layered structure consisting of the substrate 2 and the coating layer 3. The heat-resistant cushioning sheet 1 has a high flexibility (cushioning ability) derived from the fluorine resin included in the substrate 2 and a high heat resistance derived from the fluorine resin included in the substrate 2 and the heat-resistant resin included in the coating layer 3. The heat-resistant resin is a resin other than a fluorine resin and has a melting point of 280°C or higher and/or a glass transition temperature of 210°C or higher. The heat-resistant cushioning sheet 1 not only prevents direct contact between a target (target to be treated) and a thermocompression face, but can have, depending on its specific embodiment, the thermocompression treatment type, the structure of a thermocompression apparatus, etc., a function of uniforming heat and/or pressure applied by the thermocompression face to the target and adjusting rates of applying heat and/or pressure.

A thickness t1 of the substrate 2 may be greater than a thickness t2 of the coating layer 3. A ratio t2/t1 of the thickness t2 of the coating layer 3 to the thickness t1 of the substrate 2 is, for example, 0.001 to 2, and may be 0.01 to 1 or even 0.02 to 0.5. The upper limit of the ratio t2/t1 may be 1.5 or less, 1 or less, 0.8 or less, 0.6 or less, 0.5 or less, 0.4 or less, or even 0.3 or less. The lower limit of the ratio t2/t1 may be 0.05 or more, 0.1 or more, 0.15 or more, or even 0.2 or more. In the case where the ratio t2/t1 is within these ranges, a good cushioning ability of the heat-resistant cushioning sheet 1 can be ensured in a thermocompression treatment. At the same time, in that case, occurrence of the above-described uneven treatment and attachment of a substance derived from the substrate 2 to a contact surface of a target in contact with the heat-resistant cushioning sheet 1 can be more reliably reduced even when the treatment temperature and pressure are further increased.

The thickness of the substrate 2 is, for example, 10 µm to 5 mm. The lower limit of the thickness of the substrate 2 may be 30 µm or more, 40 µm or more, 50 µm or more, 75 µm or more, 100 µm or more, 200 µm or more, 300 µm or more, 400 µm or more, or even 500 µm or more. The upper limit of the thickness of the substrate 2 may be 3 mm or less, 2 mm or less, 1 mm or less, 800 µm or less, 600 µm or less, 500 µm or less, 400 µm or less, 300 µm or less, 200 µm or less, or even 150 µm or less.

The thickness of the coating layer 3 is, for example, 0.5 to 50 µm. The upper limit of the thickness of the coating layer 3 may be 40 µm or less, 30 µm or less, 25 µm or less, 20 µm or less, 15 µm or less, or even 12 µm or less. The lower limit of the thickness of the coating layer 3 may be 1 µm or more, 1.5 µm or more, 2 µm or more, 5 µm or more, 10 µm or more, 15 µm or more, or even 20 µm or more.

In the example of FIG. 1, both the substrate 2 and the coating layer 3 are single-layered. The substrate 2 and the coating layer 3 each may be formed of two or more layers. However, the substrate 2 and/or the coating layer 3 is preferably single-layered because, in that case, delamination during a thermocompression treatment can be reduced and a high heat conductivity from a thermocompression face to a target can be ensured.

The substrate 2 includes the fluorine resin. The substrate 2 may include only the fluorine resin. As long as the effects of the present invention can be obtained, the substrate 2 may include a material other than a fluorine resin. The term "fluorine resin" in the present specification refers to a resin in which a structural unit forming a main chain includes a fluorine atom. The fluorine atom is generally present in the structural unit as an atom substituted for a hydrogen atom bonded to a carbon atom being a portion of the main chain.

Examples of the fluorine resin include PTFE, a modified PTFE, an ethylene-tetrafluoroethylene copolymer (ETFE), a tetrafluoroethylene-hexafluoropropylene copolymer (FEP), a tetrafluoroethylene-perfluoroalkylvinyl ether copolymer (PFA), and polyvinylidene fluoride (PVDF). The fluorine resin is preferably PTFE, a modified PTFE, or ETFE because of their particularly high heat resistance and flexibility, and is particularly preferably PTFE or a modified PTFE. Additionally, since PTFE and a modified PTFE generally have a high releasability, the heat-resistant cushioning sheet 1, as in the example of FIG. 1, in which the exposed surface 12 on the side opposite to the coating layer 3 is formed by the substrate 2 can ensure an excellent releasability from a thermocompression face after a thermocompression treatment.

The modified PTFE is a copolymer of TFE and a modified comonomer. A content of a tetrafluoroethylene (TFE) unit in the copolymer needs to be 99 mass% or more so that the copolymer can be classified as the modified PTFE. The modified PTFE is, for example, a copolymer of TFE and at least one modified comonomer selected from ethylene, perfluoroalkylvinyl ether, and hexafluoropropylene.

The substrate 2 is preferably a sintered PTFE sheet including PTFE having been sintered. In the present specification, sintering of PTFE means heating PTFE obtained by polymerization to a temperature equal to or higher than its melting point (327°C), for example, to 340 to 380°C.

The substrate 2 may be a skived sheet including the fluorine resin. Whether a sheet is a skived sheet can be determined by confirming a linear flaw (known as a skived streak by persons skilled in the art) specific to a skived sheet by observation of an enlarged surface of the sheet. A microscope such as an optical microscope and a surface property evaluation apparatus can be used for observation of the enlarged surface. When a skived sheet is obtained by skiving, resin shavings are accumulated on a skiving blade, leaving a linear scratch on a surface of the sheet. A skived streak is made thereby. A skived streak generally extends in an MD of the substrate 2. The MD of the substrate 2 in a strip shape is generally a longitudinal direction of the sheet.

The coating layer 3 includes the heat-resistant resin. The coating layer 3 may include only the heat-resistant resin. As long as the effects of the present invention can be obtained, the coating layer 3 can include a material other than the heat-resistant resin.

The heat-resistant resin has a melting point of 280°C or higher and/or a glass transition temperature of 210°C or higher. However, fluorine resins are excluded from the heat-resistant resin. The melting point may be 310°C or higher, 315°C or higher, 320°C or higher, or even 325°C or higher. The upper limit of the melting point is, for example, 400°C or lower. The glass transition temperature may be 220°C or higher, 230°C or higher, 240°C or higher, or even 250°C or higher. The upper limit of the glass transition temperature is, for example, 300°C or lower. In the present specification, the melting point of a resin refers to the peak temperature at an endothermic peak attributed to crystal melting, the endothermic peak being measured by differential scanning calorimetry (hereinafter referred to as "DSC") in which the temperature of the resin is increased at a constant temperature rise rate, e.g., 10°C/min. The glass transition temperature of a resin refers to the peak temperature at an endothermic peak attributed to a glass transition, the endothermic peak being measured by DSC in which the temperature of the resin is increased at a constant temperature rise rate, e.g., 10°C/min.

The heat-resistant resin is, for example, at least one selected from the group consisting of polyimide, polyetherimide, polysulfone, polyethersulfone, an aromatic polyetherketone, and polyamide imide. The heat-resistant resin may be polyimide and/or an aromatic polyetherketone for their particularly high dimensional stability at high temperatures. Examples of the aromatic polyetherketone include polyetheretherketone (PEEK), polyetherketone, polyetherketoneketone, and polyetheretherketoneketone. The aromatic polyetherketone may be PEEK.

Examples of the polyimide include a condensation polymer of tetracarboxylic dianhydride and diamine. However, the polyimide is not limited to the above example. In the case where the polyimide is the above condensation polymer, the types of the tetracarboxylic dianhydride and the diamine are not limited. The polyimide is typically an aromatic polyamide.

The coating layer 3 of the example of FIG. 1 is disposed to cover the entire substrate 2 when viewed in a direction perpendicular to a principal surface of the heat-resistant cushioning sheet 1. However, the embodiment of placing the coating layer 3 is not limited to the above example. The coating layer 3 may be disposed at least in a region (region of use of the heat-resistant cushioning sheet 1) to be in contact with a target in a thermocompression treatment.

The substrate 2 and the coating layer 3 are joined to each other. The joining can be performed, for example, using an adhesive (the adhesive includes a pressure-sensitive adhesive). In other words, the heat-resistant cushioning sheet 1 may further include an adhesive layer 4, and the substrate 2 and the coating layer 3 may be joined to each other by the adhesive layer 4 (refer to FIG. 2). The substrate 2 and the coating layer 3 may be joined to each other by another method such as thermal lamination. However, the joining condition is more stable at high temperatures in a thermocompression treatment in the case of joining by the adhesive layer 4.

The adhesive layer 4 includes an adhesive composition and/or its cured product. Examples of the adhesive composition include silicone compositions, acrylic compositions, urethane compositions, epoxy compositions, and rubber compositions. The adhesive composition may be a silicone composition for its excellent heat resistance.

The thickness of the adhesive layer 4 is, for example, 3 to 50 µm, and may be 4 to 45 µm, 5 to 40 µm, or even 5 to 35 µm. The thickness of the adhesive layer 4 may be smaller than that of the substrate 2, or may be greater than that of the coating layer 3.

The coating layer 3 and the adhesive layer 4 may be, respectively, a substrate layer of an adhesive tape and an adhesive layer of the adhesive tape, the substrate layer including the heat-resistant resin, the adhesive layer being arranged on a principal surface of the substrate layer.

As long as the effects of the present invention can be obtained, the heat-resistant cushioning sheet 1 may have a member and/or a layer other than the substrate 2 and the coating layer 3. However, as in the example of FIG. 1, an embodiment of the sheet 1 not including a member nor a layer other than the substrate 2 and the coating layer 3 is advantageous in that a high heat conductivity from a thermocompression face to a target can be ensured. Moreover, in this case, since the exposed surface 12 of the heat-resistant cushioning sheet 1 is formed by the substrate 2 including the fluorine resin, a high releasability, derived from the fluorine resin, from a thermocompression face having undergone a thermocompression treatment can be ensured.

The heat-resistant cushioning sheet 1 is preferably a non-porous sheet. The heat-resistant cushioning sheet 1 may be an imperforate sheet having no hole communicating both principal surfaces thereof at least in the region of use. The heat-resistant cushioning sheet 1 may be an impermeable sheet that allows no fluid, such as water, to permeate therethrough in the thickness direction because of high liquid repellency (water repellency and oil repellency) of the materials, such as PTFE, included in the substrate 2 and/or the coating layer 3. Alternatively, the heat-resistant cushioning sheet 1 may be an insulating sheet (a nonconductive sheet) because of a high insulating property of the materials, such as PTFE, included in the substrate 2 and/or the coating layer 3. The insulating property is expressed, for example, by a surface resistivity of 1 × 10¹⁴ Ω/□ or more at at least one exposed surface. The surface resistivity may be 1 × 10¹⁵ Ω/□ or more, 1 × 10¹⁶ Ω/□ or more, or even 1 × 10¹⁷ Ω/□ or more. The substrate 2 and/or the coating layer 3 may include an electrically conductive material such as carbon black, an electrically conductive polymer, or an electrically conductive metal oxide. In this case, the heat-resistant cushioning sheet 1 can have a function, such as an antistatic function, derived from the electrically conductive material. The surface resistivity of the heat-resistant cushioning sheet 1 including the electrically conductive material is, for example, 1 × 10¹² Ω/□ or less, and may be 1 × 10⁸ Ω/□ or less or 1 × 10⁴ Ω/□ or less at at least one exposed surface. The exposed surface having any of the above surface resistivities may be the exposed surface 11 to be in contact with a target in a thermocompression treatment.

The heat-resistant cushioning sheet 1 is in the shape of, for example, a polygon such as a square or a rectangle, a circle, an oval, or a strip. The polygon may have a rounded corner. The shape of the heat-resistant cushioning sheet 1 is, however, not limited to the above examples. The polygonal, circular, or oval heat-resistant cushioning sheet 1 can be distributed in the form of a sheet, and the strip-shaped heat-resistant cushioning sheet 1 can be distributed in the form of a winding body (roll) formed of the sheet 1 wound around a winding core. The width of the strip-shaped heat-resistant cushioning sheet 1 and that of the winding body formed of the strip-shaped wound heat-resistant cushioning sheet 1 can be set to any values.

The thickness of the heat-resistant cushioning sheet 1 is, for example, 10.5 µm or more, and may be 20 µm or more, 30 µm or more, 50 µm or more, 100 µm or more, 125 µm or more, 150 µm or more, 200 µm or more, 250 µm or more, 300 µm or more, 400 µm or more, 500 µm or more, or even 550 µm or more. The upper limit of the thickness is, for example, 5100 µm or less, and may be 5000 µm or less, 4000 µm or less, 3000 µm or less, 2000 µm or less, 1500 µm or less, 1000 µm or less, 800 µm or less, 600 µm or less, 500 µm or less, 400 µm or less, 300 µm or less, or even 200 µm or less.

A joining force between the substrate 2 and the coating layer 3 may be 1.5 N/20 mm or more, 1.6 N/20 mm or more, 1.8 N/20 mm or more, 2 N/20 mm or more, 2.5 N/20 mm or more, 3 N/20 mm or more, 4 N/20 mm or more, 5 N/20 mm or more, 6 N/20 mm or more, or even 7 N/20 mm or more. The upper limit of the joining force is, for example, 15 N/20 mm or less. The joining force between the substrate 2 and the coating layer 3 can be evaluated by a 180° peel test (peeling rate: 300 mm/min) in which the coating layer 3 is peeled off the substrate 2. When the substrate 2 and the coating layer 3 are joined to each other by the adhesive layer 4, a separation face in the peel test may be between the substrate 2 and the adhesive layer 4.

### [Method for manufacturing heat-resistant cushioning sheet]

The heat-resistant cushioning sheet 1 can be manufactured, for example, by the following method. However, the method for manufacturing the heat-resistant cushioning sheet 1 is not limited to the following example.

The method for manufacturing the substrate 2 will be described using as an example the substrate 2 including PTFE or the modified PTFE. First, a PTFE powder (molding powder) is charged into a mold, and a given pressure is applied to the powder in the mold for a given period of time to preform the powder. The preforming can be performed at ordinary temperature. The internal space of the mold preferably has a columnar shape so that the below-described skiving using a skiving lathe can be performed. In that case, a columnar preform and a columnar PTFE block can be obtained. When the PTFE block has a columnar shape, a skiving lathe, which continuously rotates the block and skives a surface thereof, can be used and the substrate 2 can be efficiently formed. Next, the resulting preform is taken out of the mold and sintered at a temperature equal to or higher than the melting point (327°C) of PTFE for a given period of time to obtain a PTFE block. Subsequently, the obtained PTFE block is skived to a given thickness to obtain a PTFE sheet that is a skived sheet. The obtained PTFE sheet may be directly used as the substrate 2, or may be used as the substrate 2, for example, after a given treatment or after laminated with another layer. By the above manufacturing method, the thickness of the substrate 2 to be formed is relatively easily controlled, and, moreover, the substrate 2 can be relatively easily formed in the shape of a strip. Furthermore, a modified PTFE sheet being a skived sheet can be formed by the above method with the use of a modified PTFE powder instead of the PTFE powder.

The substrate 2 including PTFE or the modified PTFE may be manufactured by the following method. First, a base sheet having a surface to which a PTFE dispersion is to be applied is prepared. The base sheet is formed of, for example, a resin, a metal, paper, or a composite material thereof. The surface of the base sheet to which the PTFE dispersion is to be applied may have been subjected to a separation treatment for easier separation of the PTFE sheet from the base sheet. A known method may be employed for the separation treatment. Next, a coating film of the PTFE dispersion is formed on the surface of the base sheet. Any of various coaters can be used for the application of the PTFE dispersion. The PTFE dispersion may be applied to the surface of the base sheet by immersing the base sheet in the PTFE dispersion. Next, a PTFE sheet is formed by drying and sintering the coating film formed of the PTFE dispersion on the surface of the base sheet. Then, the formed PTFE sheet is separated from the base sheet to obtain the PTFE sheet that is a cast sheet. The obtained PTFE sheet may be directly used as the base sheet, or may be used as the base sheet, for example, after a given treatment or after another layer is laminated thereon. The thickness of the PTFE sheet formed by this method can be controlled by adjusting the thickness of the PTFE dispersion applied to the base sheet and/or the number of times the PTFE dispersion is applied thereto. Additionally, a modified PTFE sheet can be formed by the above method with the use of a modified PTFE dispersion instead of the PTFE dispersion.

The above given treatment for a fluorine resin sheet such as a PTFE sheet is, for example, an adhesion improvement treatment that increases a joining force of a surface of the fluorine resin sheet to another member. The adhesion improvement treatment may be a chemical treatment or a physical treatment. Examples of the chemical treatment include a surface treatment using a treatment solution containing a metallic sodium. Examples of the physical treatment include low-temperature plasma treatments such as a sputter etching treatment, a plasma etching treatment, and a corona discharge treatment. In this aspect, the principal surface of the substrate 2 on the coating layer 3 side may have been subjected to the adhesion improvement treatment.

The method for manufacturing the coating layer 3 will be described using as an example the coating layer 3 including the polyimide. The coating layer 3 including the polyimide can be manufactured, for example, by a method for manufacturing typical polyimide sheets. An example of the manufacturing method will be described hereinafter. First, a solution of polyamic acid which is a precursor of polyimide is formed from tetracarboxylic dianhydride and diamine. Next, the formed polyamic acid solution is applied to a surface of a base sheet. The base sheet is formed of, for example, a resin, a metal, paper, or a composite material thereof. The surface of the base sheet to which the polyamic acid solution is to be applied may have been subjected to a separation treatment for easier separation of the polyimide sheet from the substrate sheet. A known method may be employed for the separation treatment. Any of various coaters can be used to apply the polyamic acid solution to the base sheet. The polyamic acid solution may be applied to the surface of the base sheet by immersing the base sheet in the polyamic acid solution. Next, imidization of the coating film formed of the polyamic acid solution on the surface of the base sheet is caused to proceed to form a polyimide sheet. The imidization can be caused to proceed, for example, by heating and/or addition of a catalyst. After post heating of the polyimide sheet is performed, as needed, for removing a solvent, etc., the formed polyimide sheet is separated from the base sheet to obtain the polyimide sheet. The obtained polyimide sheet may be directly used as the coating layer 3, or may be used as the coating layer 3, for example, after a given treatment. The thickness of the polyimide sheet obtained by this method can be controlled by adjusting the thickness of the polyamic acid solution applied to the base sheet.

The coating layer 3 other than the polyimide sheet may be manufactured, for example, by any of various sheet formation method such as melt extrusion.

Next, the formed substrate 2 and the formed coating layer 3 are joined to each other to obtain the heat-resistant cushioning sheet 1. An adhesive agent can be used for the joining.

### [Use of heat-resistant cushioning sheet]

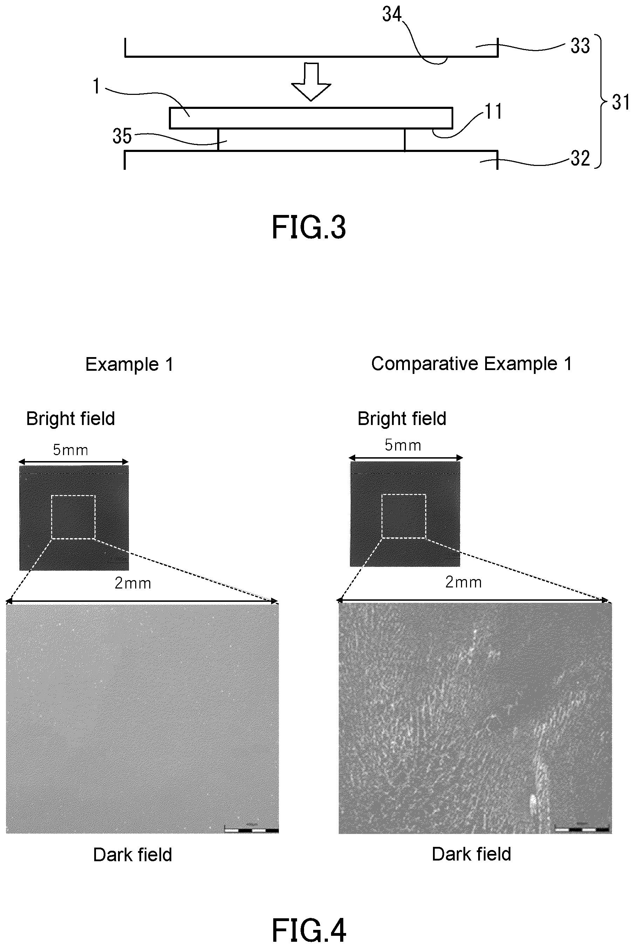

As shown in FIG. 3, the heat-resistant cushioning sheet 1 can be used in a state where the sheet 1 is disposed between a thermocompression face 34 of a thermocompression apparatus 31 and a target 35 in a thermocompression treatment of the target 35 using the thermocompression apparatus 31. The heat-resistant cushioning sheet 1 prevents direct contact between the target 35 and the thermocompression face 34 and accordingly can prevent, for example, fixation of the target 35 and the thermocompression face 34. The heat-resistant cushioning sheet 1 has a high cushioning ability. The thermocompression apparatus 31 of FIG. 3 includes a stage 32 and a thermocompression head 33 having the thermocompression face 34. The heat-resistant cushioning sheet 1 can be used in a state where the sheet 1 is disposed between the thermocompression head 33 and the target 35 such that the exposed surface 11 formed by the coating layer 3 is in contact with the target 35. The thermocompression treatment in this example is performed by bringing the thermocompression head 33 and the stage 32 closer to each other, or typically by lowering the thermocompression head 33, with the target 35 placed on the stage 32. The thermocompression treatment is, for example, thermocompression bonding or hot pressing of the target 35. However, the thermocompression treatment is not limited to the above examples.

The heat-resistant cushioning sheet 1 may be fed and disposed between the thermocompression face 34 and the target 35 by conveyance. The heat-resistant cushioning sheet 1 fed and disposed by conveyance is, for example, in the shape of a strip.

In the thermocompression treatment, a temperature set for heating the thermocompression apparatus 31, in other words, a use temperature of the heat-resistant cushioning sheet 1, is, for example, 200°C or higher and may be 225°C or higher, 250°C or higher, 275°C or higher, or even 300°C or higher. The upper limit of the use temperature is, for example, 330°C or less. In the thermocompression treatment, a pressure set for compressing the thermocompression apparatus 31, in other words, the use pressure of the heat-resistant cushioning sheet 1, is, for example, 10 MPa or more and may be 15 MPa or more, 20 MPa or more, 25 MPa or more, or even 30 MPa or more. The upper limit of the use pressure is, for example, 50 MPa or less. It should be noted that the use temperature and the use pressure of the heat-resistant cushioning sheet 1 are not limited to the above ranges. The heat-resistant cushioning sheet 1 can also be used at a use temperature and/or a use pressure lower than the above range(s).

### [Thermocompression treatment method]

The thermocompression treatment of the target 35 can be performed using the heat-resistant cushioning sheet 1 of the present invention. The thermocompression treatment can be performed, for example, using the thermocompression apparatus 31. More specifically, the thermocompression treatment can be performed in a state where the heat-resistant cushioning sheet 1 is disposed between the target 35 and the thermocompression face 34 such that the exposed surface 11 formed by the coating layer 3 is in contact with the target 35. The heat-resistant cushioning sheet 1 prevents direct contact between the target 35 and the thermocompression face 34. The heat-resistant cushioning sheet 1 can be fed and disposed between the target 35 and the thermocompression face 34, for example, by conveyance.

### [Method for manufacturing thermocompressed body]

A thermocompressed body can be manufactured using the heat-resistant cushioning sheet 1 of the present invention. The method for manufacturing a thermocompressed body using the heat-resistant cushioning sheet 1 includes a step of obtaining a thermocompressed body of the target 35 by performing a thermocompression treatment in a state where the heat-resistant cushioning sheet 1 is disposed between the target 35 and the thermocompression face 34 such that the exposed surface 11 formed by the coating layer 3 is in contact with the target 35. The heat-resistant cushioning sheet 1 prevents direct contact between the target 35 and the thermocompression face 34. The thermocompression treatment is, for example, thermocompression bonding or hot pressing of the target 35. A thermocompression-bonded body or a hot-pressed body can be obtained thereby as a thermocompressed body.

### EXAMPLES

Hereinafter, the present invention is described in more detail with reference to examples. The present invention is not limited to the following examples.

First, the methods for evaluating substrates, coating layers, and heat-resistant cushioning sheets produced in examples will be described.

### [Thickness]

Thicknesses of the substrates, the coating layers, and the heat-resistant cushioning sheets were each determined as an average of values measured at any 3 points at 25°C with a digital micrometer (minimum increment: 0.001 mm).

### [Joining force]

Joining forces between the substrates and the coating layers were evaluated in the following manner. Each produced heat-resistant cushioning sheet was cut into a strip having a width of 20 mm and a length of 200 mm, which was employed as a specimen. The cutting was performed after an adhesive tape (a coating layer and an adhesive layer) was adhered to a PTFE skived sheet (a substrate), a bonding roller having a mass of 2 kg and defined in Japanese Industrial Standards (JIS) Z 0237: 2009 was moved back and forth once at 25°C over the adhesive tape and the PTFE skived sheet, and the adhesive tape and the PTFE skived sheet were left for 20 minutes to stabilize the joining condition of the two. Next, the specimen was adhered to a surface of a stainless steel plate using a double-sided adhesive tape (No. 500 manufactured by Nitto Denko Corporation). The adhesion was performed such that the entire PTFE skived sheet was in contact with the stainless steel plate. The double-sided adhesive tape selected was one having such a strong adhesiveness that the specimen would not be separated from the stainless steel plate during the evaluation. Next, an about 10 mm-long longitudinal end portion of the adhesive tape was peeled by hand from the substrate to provide a free end to the adhesive tape. Next, the specimen and the stainless steel plate were set in a tensile tester. The specimen and the stainless steel plate were set such that a long-side direction of the specimen corresponded to a chuck-to-chuck direction of the tester, one chuck of the tester held the stainless steel plate, and the other chuck held the free end of the adhesive tape. Then, a 180° peel test was performed in which the adhesive tape was peeled off the PTFE skived sheet at a separation angle of 180° and a peeling rate of 300 mm/min. An average of stresses measured from when 20 mm of the adhesive tape was peeled off after the start of the test to when 150 mm thereof was peeled off was employed as a joining force between the substrate and the coating layer. The test was performed in an environment at a temperature of 25±1°C and a humidity of 50±5%.

### [Releasability at the time of thermocompression treatment]

A releasability of each heat-resistant cushioning sheet at the time of a thermocompression treatment was evaluated as follows by a hot pressing test using a simulated target.

A simulated compression bonding target was disposed on a stage of a hot pressing apparatus (HTM-3000 manufactured by Hakuto Co., Ltd.) including a thermocompression head and the stage. As the compression bonding target was used a laminate composed of a copper substrate board (size: 20 mm × 20 mm; thickness: 3 mm) and a Si semiconductor chip (size: 5 mm × 5 mm; thickness: 0.2 mm), the copper substrate board having a chip placement surface which was plated with silver, the Si semiconductor chip having a joining surface which was plated with silver and to which a sinter-joining silver paste material (ANP-1 manufactured by Applied Nanoparticle Laboratory Corporation) was applied. The compression bonding target was disposed such that the stage and the copper substrate board were in contact with each other. Next, the heat-resistant cushioning sheet to be evaluated was cut to a size of 30 mm × 30 mm and disposed on the Si semiconductor chip of the laminate. The heat-resistant cushioning sheet was disposed such that the semiconductor chip was located roughly at the center of the heat-resistant cushioning sheet when observed in the above direction. The temperature of the stage was set to 80°C. Next, after the thermocompression head was lowered so as to reach a pressure of 20 MPa, the temperature of the head was increased to 300°C (temperature rise rate: 1 °C/sec). After that, a hot pressing test was performed for a compression time of 300 seconds, and whether heat fixation of the heat-resistant cushioning sheet to the thermocompression head or the laminate serving as a compression bonding target occurred was evaluated. The releasability was judged as good (o) when the heat-resistant cushioning sheet was separated after the test from the thermocompression head and the Si semiconductor chip by itself or by pulling the sheet by hand. The releasability was judged as poor (x) when the heat-resistant cushioning sheet was not separated after the test by pulling the sheet by hand.

### [Attachment of PTFE to target]

The surface of the Si semiconductor chip having undergone the hot pressing test was examined with an optical microscope (150-fold magnification) to see whether PTFE, typically a fibrous PTFE, was attached on the surface. The examination was performed by dark-field microscopy because, in that case, a high-contrast enlarged observation image can be obtained.

### (Comparative Example 1)

A PTFE powder (POLYFLON PTFE M-12 manufactured by DAIKIN INDUSTRIES, LTD.) was charged into a cylindrical mold and preformed at a temperature of 23°C and a pressure of 8.5 MPa for a pressure application time of 1 hour. Next, the resulting preform was taken out of the mold and sintered at 370°C for 24 hours to obtain a columnar PTFE block having a height of 300 mm and an outer diameter of 470 mm. Then, the obtained PTFE block was skived using a skiving lathe to produce a PTFE skived sheet (thickness: 100 µm), which was employed as a heat-resistant cushioning sheet of Comparative Example 1.

### (Example 1)

A 60-µm-thick polyimide adhesive tape (No. 360UL manufactured by Nitto Denko Corporation; thickness of polyimide layer: 25 µm) was prepared. The prepared adhesive tape, which was employed as the coating layer 3 and the adhesive layer 4, and a PTFE skived sheet as produced in Comparative Example 1, which was employed as the substrate 2, were joined to each other. The resulting sheet was employed as a heat-resistant cushioning sheet of Example 1.

### (Example 2)

A sputter etching treatment (amount of gas: 300 to 600 scc/min; degree of vacuum: 8 to 15 Pa; output: 6 to 10 kW; frequency: 13.56 MHz) using argon was performed for one principal surface of a PTFE skived sheet as produced in Comparative Example 1. Next, an adhesive tape as prepared in Example 1 was employed as the coating layer 3 and the adhesive layer 4, and was joined to a sputter-etched surface of the PTFE skived sheet. The resulting sheet was employed as a heat-resistant cushioning sheet of Example 2.

### (Example 3)

A 25-µm-thick PEEK sheet (Shin-Etsu Sepia Film manufactured by Shin-Etsu Polymer Co., Ltd.) was prepared. The prepared PEEK sheet was employed as the coating layer 3, and was laminated on a PTFE skived sheet as produced in Comparative Example 1. The resulting sheet was employed as a heat-resistant cushioning sheet of Example 3.

The evaluation results are collectively shown in Table 1 below. FIG. 4 shows enlarged observation images (light-field and dark-field images by optical microscopy) of the surfaces of the Si semiconductor chips of Example 1 and Comparative Example 1 having undergone the hot pressing test.

**[Table 1]**

| | Example 1 | Example 2 | Example 3 | Comparative Example 1 |
|---|---|---|---|---|
| Joining force [N/20mm] | 1.80 | 7.74 | - | - |
| Releasability | ○ | ○ | ○ | ○ |
| Attachment of PTFE to target | Not attached | Not attached | Not attached | Attached |

In Examples 1 and 2 and Comparative Example 1, the copper substrate board and the Si semiconductor chip were able to be joined without any trouble. However, as shown in Table 1 and FIG. 4, in Comparative Example 1, attachment of a lot of fibrous PTFE to the surface of the Si semiconductor chip was confirmed. On the other hand, in Examples 1 and 2, attachment of PTFE was not confirmed. As it was difficult to confirm attachment of PTFE in the light-field images, the dark-field images were selected for confirmation, in which attachment of PTFE was able to be confirmed (refer to FIG. 4). Moreover, it has been confirmed that the sputter etching treatment of the PTFE sheet can improve the joining force between the substrate 2 and the coating layer 3.

### INDUSTRIAL APPLICABILITY

The heat-resistant cushioning sheet of the present invention can be used in a state where the sheet is disposed between a thermocompression face of a thermocompression apparatus and a target in a thermocompression treatment of the target. The thermocompression treatment is, for example, thermocompression bonding or hot pressing.

## Claims

1. A heat-resistant cushioning sheet,
the heat-resistant cushioning sheet being configured to be disposed between a thermocompression face of a thermocompression apparatus and a target in a thermocompression treatment of the target, the heat-resistant cushioning sheet comprising:
a substrate including a fluorine resin; and
a coating layer including a heat-resistant resin and disposed on a one principal surface side of the substrate, wherein
one exposed surface of the heat-resistant cushioning sheet is formed by the coating layer, and
the heat-resistant resin is a resin other than a fluorine resin and has a melting point of 280°C or higher and/or a glass transition temperature of 210°C or higher.

2. The heat-resistant cushioning sheet according to claim 1, wherein a thickness of the substrate is greater than a thickness of the coating layer.

3. The heat-resistant cushioning sheet according to claim 1 or 2, wherein the substrate and/or the coating layer is single-layered.

4. The heat-resistant cushioning sheet according to any one of claims 1 to 3, further comprising an adhesive layer, wherein
the substrate and the coating layer are joined to each other by the adhesive layer.

5. The heat-resistant cushioning sheet according to any one of claims 1 to 4, wherein the substrate is a skived sheet including the fluorine resin.

6. The heat-resistant cushioning sheet according to any one of claims 1 to 5, wherein
the fluorine resin is polytetrafluoroethylene (PTFE) or a modified PTFE, and
a content of a tetrafluoroethylene (TFE) unit in the modified PTFE is 99 mass% or more.

7. The heat-resistant cushioning sheet according to any one of claims 1 to 6, wherein the heat-resistant resin is at least one selected from the group consisting of polyimide, polyetherimide, polysulfone, polyethersulfone, an aromatic polyetherketone, and polyamide imide.

8. The heat-resistant cushioning sheet according to any one of claims 1 to 7, wherein a joining force between the substrate and the coating layer is 1.5 N/20 mm or more.

9. A method of a thermocompression treatment of a target using a thermocompression apparatus, wherein
the thermocompression treatment is performed in a state where a heat-resistant cushioning sheet is disposed between the target and a thermocompression face of the apparatus,
the heat-resistant cushioning sheet is the heat-resistant cushioning sheet according to any one of claims 1 to 8, and
in the thermocompression treatment, the heat-resistant cushioning sheet is disposed between the target and the thermocompression face such that the one exposed surface formed by the coating layer is in contact with the target.
